# EUROPEAN PATENT APPLICATION

(11) **EP 3 522 025 A1**
(43) Date of publication of application: **07.08.2019**
(21) Application number: 16917320.0
(22) Date of filing: 30.09.2016
(51) Int. Cl.: G06F 13/40

(54) **CHARGING CONTROL METHOD, CHARGING CONTROL SYSTEM AND COMPUTING DEVICE**

(71) Applicant: Shenzhen Royole Technologies Co., Ltd., Shenzhen, Guangdong 518052 (CN)
(72) Inventor: YE, Zegang, Shenzhen Guangdong 518052 (CN); HUANG, Linkai, Shenzhen Guangdong 518052 (CN)
(74) Representative: Hamer, Christopher K.
(86) International application number: PCT/CN2016/101198
(87) International publication number: WO 2018/058570

(57) **Abstract**

A charging control method, a charging control system, and a computing device are provided. The method includes the following. Whether data transmission is being performed between the computing device and the terminal is determined when a communication interface of the computing device is coupled with the terminal (101), and a current value of charging current output to the terminal is set to be a charging current value corresponding to a fast charging mode when no data transmission is performed between the computing device and the terminal (102). In the method, when no data transmission is performed between the computing device and the terminal, the current value of the charging current output to the terminal is set to be the charging current value corresponding to the fast charging mode, such that the terminal can be charged at a relatively high charging speed.

## Description

### TECHNICAL FIELD

The present disclosure relates to the technical field of charging, and particularly to a charging control method, a charging control system, and a computing device.

### BACKGROUND

At present, a terminal (such as a smart phone, a tablet computer, or the like) can be coupled with and charged by a computing device (such as a laptop computer, a desk computer, or the like) via a universal serial bus (USB) data line. However, at present, as for charging the terminal by the computing device, considering that data transmission can be performed between the computing device and the terminal and overhigh charging current can affect efficiency of data transmission, the computing device usually limits the charging current to be below 500mA. Thus, when charging the terminal by the computing device, a charging speed is relatively low.

### SUMMARY

In view of the above, an embodiment of the present disclosure provides a charging control method, a charging control system, and a computing device, such that the computing device can charge a terminal at a relatively high charging speed.

The embodiment of the present disclosure provides a charging control method, and the method applies to charging a terminal by a computing device. The method includes the following. Whether data transmission is being performed between the computing device and the terminal is determined when a communication interface of the computing device is coupled with the terminal, and a current value of charging current output to the terminal is set to be a charging current value corresponding to a fast charging mode when no data transmission is performed between the computing device and the terminal.

The embodiment of the present disclosure provides a charging control system, and the system applies to charging a terminal by a computing device. The system includes a transmission determination module configured to determine whether data transmission is being performed between the computing device and the terminal when a communication interface of the computing device is coupled with the terminal, and a charging control module configured to set a current value of charging current output to the terminal to be a charging current value corresponding to a fast charging mode when no data transmission is performed between the computing device and the terminal.

The embodiment of the present disclosure provides a computing device. The computing device includes a communication interface, a memory storing a set of program codes, and a processor configured to invoke the set of program codes to perform following operations. Whether data transmission is being performed between the computing device and the terminal is determined when a communication interface of the computing device is coupled with the terminal, and a current value of charging current output to the terminal is set to be a charging current value corresponding to a fast charging mode when no data transmission is performed between the computing device and the terminal.

In the embodiment, when no data transmission is performed between the computing device and the terminal, the current value of the charging current output to the terminal is set to be the charging current value corresponding to the fast charging mode, such that the terminal can be charged at a relatively high charging speed.

### BRIEF DESCRIPTION OF THE DRAWINGS

In order to illustrate technical solutions in embodiments of the present disclosure more clearly, the following briefly introduces the accompanying drawings required for describing the embodiments. Apparently, the accompanying drawings in the following description merely illustrate some embodiments of the present disclosure. Those of ordinary skill in the art may also obtain other drawings based on these accompanying drawings without creative work.
FIG. 1 is a schematic flow chart illustrating a charging control method according to an embodiment of the present disclosure.
FIG. 2 is a schematic flow chart illustrating a charging control method according to another embodiment of the present disclosure.
FIG. 3 is a schematic structural diagram illustrating a charging control system according to an embodiment of the present disclosure.
FIG. 4 is a schematic structural diagram illustrating a computing device according to an embodiment of the present disclosure.

### DETAILED DESCRIPTION

Below technical solutions of embodiments of the present disclosure will be described clearly and completely in conjunction with the accompanying drawings of the embodiments of the present disclosure. Apparently, some but not all embodiments of the present disclosure are described. Based on the embodiments of the present disclosure, all the other embodiments, which a person ordinarily skilled in the art obtains without paying creative work, fall within the scope of protection of the present disclosure.

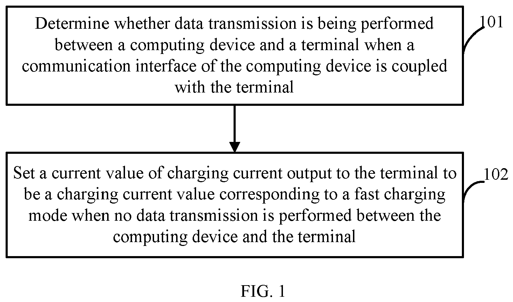

Referring to FIG. 1, a charging control method according to an embodiment of the present disclosure applies to charging a terminal by a computing device. The computing device may be a laptop computer, a desk computer, or the like. The terminal may be a smart phone, a tablet computer, a digital camera, or the like. The method includes the following.

Step 101, when a communication interface of the computing device is coupled with the terminal, whether data transmission is being performed between the computing device and the terminal is determined.

The communication interface may be a universal serial bus (USB) interface.

The data transmission may include the computing device transmitting a file, an instruction and the like to the terminal, and may also include the terminal transmitting a file, an instruction and the like to the computing device.

Alternatively, whether the data transmission is being performed between the computing device and the terminal is determined as follows. Whether the computing device is transmitting data through a communication module of the computing device is determined. When the computing device is transmitting data through the communication module, it is determined that the data transmission is being performed between the computing device and the terminal; otherwise, it is determined that no data transmission is performed between the computing device and the terminal. The communication module may be a USB module. Specifically, by determining whether threads run by a central processing unit (CPU) of the computing device include a USB control thread, or by determining whether a reception or transmission function based on a USB protocol is executed by the CPU, whether the computing device is transmitting data through the communication module can be determined.

Alternatively, whether the data transmission is being performed between the computing device and the terminal is determined as follows. Whether a clock of the communication interface is in an operation state. When the clock of the communication interface is in the operation state, it is determined that the data transmission is being performed between the computing device and the terminal; otherwise, it is determined that no data transmission is performed between the computing device and the terminal. Specifically, by querying the clock supplied to the communication module by the CPU, whether a clock line from the CPU to the communication module has a frequency is determined, whereby whether the clock of the communication interface is in the operation state is determined.

Alternatively, whether the data transmission is being performed between the computing device and the terminal is determined as follows. Whether a buffer of the communication module for temporary caching is empty. When the buffer is not empty, it is determined that the data transmission is being performed between the computing device and the terminal; otherwise, it is determined that no data transmission is performed between the computing device and the terminal. Specifically, the communication module applies for the buffer from a memory. The communication module records an address pointer of the buffer in the memory. The CPU can determine whether the buffer is empty by determining whether the address pointer is null.

The above illustrates several manners for determining whether data transmission is being performed between the computing device and the terminal, but what needs to be illustrated is that other manners for determining whether data transmission is being performed between the computing device and the terminal can be also applied to the present disclosure, and the embodiment is not limited thereto.

Step 102, when no data transmission is performed between the computing device and the terminal, a current value of charging current output to the terminal is set to be a charging current value corresponding to a fast charging mode.

Specifically, a charging current value range corresponding to the fast charging mode may be from 1A to 1.5A. Setting the current value of the charging current output to the terminal to be the charging current value corresponding to the fast charging mode may be that the current value of the charging current output to the terminal is set to be any value of the range from 1A to 1.5A. For example, the current value of the charging current output to the terminal is set to be 1A or 1.5A. Under this condition, the terminal can be charged at a relatively high charging speed.

Specifically, the current value of the charging current output to the terminal can be set as follows. After determining the current value of the charging current output to the terminal, the CPU is controlled to write the current value of the corresponding charging current to a register of a charging circuit of the computing device. The charging circuit then outputs the corresponding charging current to the terminal according to the current value in the register.

In the embodiment, when no data transmission is performed between the computing device and the terminal, the current value of the charging current output to the terminal is set to be the charging current value corresponding to the fast charging mode, such that the terminal can be charged at a relatively high charging speed.

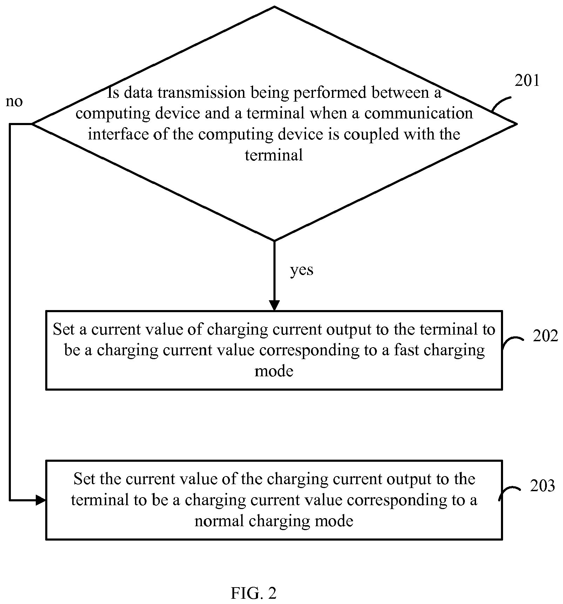

Referring to FIG. 2, a charging control method according to another embodiment of the present disclosure is shown. The method applies to charging a terminal by a computing device. The method includes the following.

Step 201, when a communication interface of the computing device is coupled with the terminal, whether data transmission is being performed between the computing device and the terminal is determined. When no data transmission is performed between the computing device and the terminal, step 202 is executed; otherwise, step 203 is executed.

Specifically, a manner in which whether the data transmission is being performed between the computing device and the terminal is determined is similar to that illustrated in step 101, and will not be repeated herein.

Step 202, a current value of charging current output to the terminal is set to be a charging current value corresponding to a fast charging mode. Step 202 is similar to step 102, and will not be repeated herein.

Step 203, the current value of the charging current output to the terminal is set to be a charging current value corresponding to a normal charging mode. The current value does not affect accuracy of the data transmission between the computing device and the terminal.

Alternatively, the charging current value corresponding to the normal charging mode is 1/2 or 1/3 of the charging current value corresponding to the fast charging mode.

Alternatively, the charging current value corresponding to the normal charging mode is generally equal to or lower than 500mA.

Alternatively, setting the current value of the charging current output to the terminal to be the charging current value corresponding to the normal charging mode may be that the current value of the charging current output to the terminal is directly set to be equal to or lower than 500mA.

Alternatively, the current value of the charging current output to the terminal is set to be the charging current value corresponding to the normal charging mode as follows. A current data transmission rate is obtained. According to a preset mapping relation between data transmission rate ranges and charging current values, a charging current value corresponding to the current data transmission rate is determined. The current value of the charging current output to the terminal is set to be the charging current value corresponding to the current data transmission rate. The charging current value corresponding to each data transmission rate range is a charging current value corresponding to the normal charging mode. In the mapping relation between the data transmission rate ranges and the charging current values, each data transmission rate range corresponds to one charging current value, and the higher the charging current value is, the lower of data transmission rates of the corresponding data transmission rate range are. That is to say, when the data transmission rate is relatively high, the charging current needs to be decreased, thereby ensuring the accuracy of data transmission. The preset mapping relation between the data transmission rate ranges and the charging current values can be recorded through a mapping relation table. Certainly, the preset mapping relation between the data transmission rate ranges and the charging current values can also be recorded through mapping or other manners, and the embodiment is not limited thereto.

In the embodiment, when no data transmission is performed between the computing device and the terminal, the current value of the charging current output to the terminal is set to be the charging current value corresponding to the fast charging mode, thereby charging the terminal at a relatively high charging speed. Furthermore, when the data transmission is being performed between the computing device and the terminal, the current value of the charging current output to the terminal is set to be the charging current value corresponding to the normal charging mode, such that the terminal is charged while ensuring the accuracy of the data transmission.

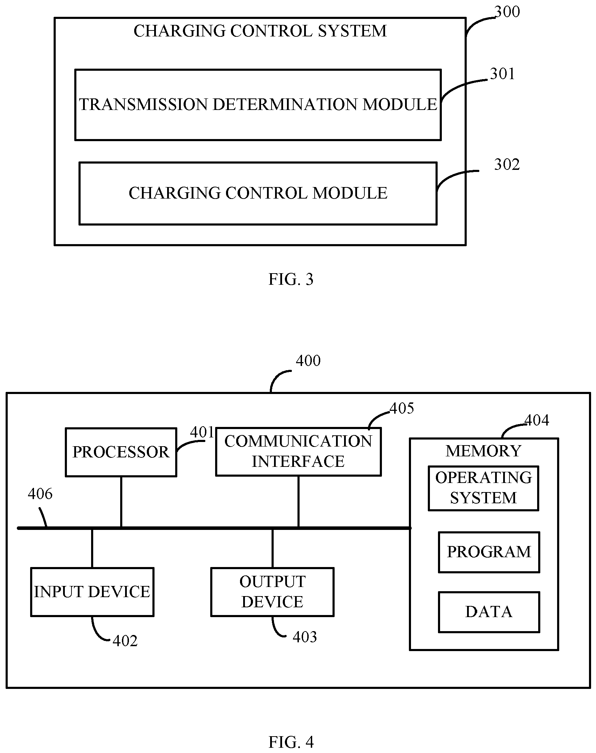

Referring to FIG. 3, a schematic structural diagram illustrating a charging control system according to an embodiment of the present disclosure is shown. A charging control system 300 illustrated in FIG. 3 is applied to a computing device. The computing device may be a laptop computer, a desk computer, or the like. The charging control system 300 includes a transmission determination module 301 and a charging control module 302.

The transmission determination module 301 is configured to determine whether data transmission is being performed between the computing device and the terminal when a communication interface of the computing device is coupled with the terminal.

The terminal may be a smart phone, a tablet computer, a digital camera, or the like.

The communication interface may be a USB interface.

The data transmission may include the computing device transmitting a file, an instruction and the like to the terminal, and may also include the terminal transmitting a file, an instruction and the like to the computing device.

Alternatively, the transmission determination module 301 determines whether the data transmission is being performed between the computing device and the terminal as follows. The transmission determination module 301 determines whether the computing device is transmitting data through a communication module of the computing device. When the computing device is transmitting data through the communication module, the transmission determination module 301 determines that the data transmission is being performed between the computing device and the terminal; otherwise, the transmission determination module 301 determines that no data transmission is performed between the computing device and the terminal. Specifically, by determining whether threads run by a central processing unit (CPU) of the computing device include a USB control thread, or by determining whether a reception or transmission function based on a USB protocol is executed by the CPU, whether the computing device is transmitting data through the communication module can be determined.

Alternatively, the transmission determination module 301 determines whether the data transmission is being performed between the computing device and the terminal as follows. The transmission determination module 301 determines whether a clock of the communication interface is in an operation state. When the clock of the communication interface is in the operation state, the transmission determination module 301 determines that the data transmission is being performed between the computing device and the terminal; otherwise, the transmission determination module 301 determines that no data transmission is performed between the computing device and the terminal. Specifically, by querying the clock supplied to the communication module by the CPU, whether a clock line from the CPU to the communication module has a frequency is determined, whereby whether the clock of the communication interface is in the operation state is determined.

Alternatively, the transmission determination module 301 determines whether the data transmission is being performed between the computing device and the terminal as follows. The transmission determination module 301 determines whether a buffer of the communication module for temporary caching is empty. When the buffer is not empty, the transmission determination module 301 determines that the data transmission is being performed between the computing device and the terminal; otherwise, the transmission determination module 301 determines that no data transmission is performed between the computing device and the terminal. Specifically, the communication module applies for the buffer from a memory (MEM). The communication module records an address pointer of the buffer in the memory. The CPU can determine whether the buffer is empty by determining whether the address pointer is null.

The above illustrates several manners for determining whether data transmission is being performed between the computing device and the terminal, but what needs to be illustrated is that other manners for determining whether data transmission is being performed between the computing device and the terminal can be also applied to the present disclosure, and the embodiment is not limited thereto.

The charging control module 302 is configured to set a current value of charging current output to the terminal to be a charging current value corresponding to a fast charging mode when no data transmission is performed between the computing device and the terminal.

Specifically, a charging current value range corresponding to the fast charging mode may be from 1A to 1.5A. The charging control module 302 sets the current value of the charging current output to the terminal to be the charging current value corresponding to the fast charging mode as follows. The charging control module 302 sets the current value of the charging current output to the terminal to be any value of the range from 1A to 1.5A. For example, the current value of the charging current output to the terminal is set to be 1A or 1.5A. Under this condition, the terminal can be charged at a relatively high charging speed.

Specifically, the charging control module 302 can set the current value of the charging current output to the terminal as follows. After determining the current value of the charging current output to the terminal, the charging control module 302 controls the CPU to write the current value of the corresponding charging current to a register of a charging circuit of the computing device. The charging circuit then outputs the corresponding charging current to the terminal according to the current value in the register.

In the embodiment, when no data transmission is performed between the computing device and the terminal, the current value of the charging current output to the terminal is set to be the charging current value corresponding to the fast charging mode, such that the terminal can be charged at a relatively high charging speed.

Furthermore, the charging control module 302 is further configured to set the current value of the charging current output to the terminal to be a charging current value corresponding to a normal charging mode when the data transmission is being performed between the computing device and the terminal. The current value does not affect accuracy of the data transmission between the computing device and the terminal.

Alternatively, the charging current value corresponding to the normal charging mode is 1/2 or 1/3 of the charging current value corresponding to the fast charging mode.

Alternatively, the charging current value corresponding to the normal charging mode is generally equal to or lower than 500mA.

Alternatively, the charging control module 302 sets the current value of the charging current output to the terminal to be the charging current value corresponding to the normal charging mode as follows. The charging control module 302 directly sets the current value of the charging current output to the terminal to be equal to or lower than 500mA.

Alternatively, the charging control module 302 sets the current value of the charging current output to the terminal to be the charging current value corresponding to the normal charging mode as follows. The charging control module 302 obtains a current data transmission rate, determines a charging current value corresponding to the current data transmission rate according to a preset mapping relation between data transmission rate ranges and charging current values, and sets the current value of the charging current output to the terminal to be the charging current value corresponding to the current data transmission rate. The charging current value corresponding to each data transmission rate range is a charging current value corresponding to the normal charging mode. In the mapping relation between the data transmission rate ranges and the charging current values, each data transmission rate range corresponds to one charging current value, and the higher the charging current value is, the lower of data transmission rates of the corresponding data transmission rate range are. That is to say, when the data transmission rate is relatively high, the charging current needs to be decreased, thereby ensuring the accuracy of data transmission. The preset mapping relation between the data transmission rate ranges and the charging current values can be recorded through a mapping relation table. Certainly, the preset mapping relation between the data transmission rate ranges and the charging current values can also be recorded through mapping or other manners, and the embodiment is not limited thereto.

Furthermore, when the data transmission is being performed between the computing device and the terminal, the current value of the charging current output to the terminal is set to be the charging current value corresponding to the normal charging mode, such that the terminal is charged while ensuring the accuracy of the data transmission.

Referring to FIG. 4, in an embodiment of the present disclosure, a computing device 400 can be used to execute the charging control methods provided in the embodiments of the present disclosure. The computing device 400 may include at least one processor 401, at least one input device 402, at least one output device 403, a memory 404, a communication interface 405, and so on. These components communicate with each other via one or more buses 406. A person of ordinary skill in the art can understand that the structure of the computing device 400 illustrated in FIG. 4 does not limit the present disclosure. The computing device may be a bus structure or a star structure. The computing device may include more or fewer components than illustrated, or certain components may be combined, or the computing device may include different component arrangements.

In the embodiment of the present disclosure, the processor 401 is a control center of the computing device 400, and connects various parts of the whole computing device 400 through various interfaces and lines, runs or executes software programs and/or units stored in the memory 404 and invokes data stored in the memory 404 to perform various functions of the terminal device 400 and process data. The processor 401 may be formed by one or more integrated circuits (ICs). For example, the processor 401 may be formed by a single encapsulated IC, and also may be formed by connection of multiple encapsulated ICs having the same function or different functions. For example, the processor 401 may just include a CPU, and also may be a combination of the CPU, a digital signal processor (DSP), a graphic processing unit (GPU), and various control chips. In the embodiment of the present disclosure, the CPU may include a signal core, or multiple cores.

In the embodiment of the present disclosure, the input device 402 may include a standard touch screen, a keyboard, and so on, and also may include a wired interface, a wireless interface, and so on, to realize interaction between a user and the computing device 400.

In the embodiment of the present disclosure, the output device 403 may include a display screen, a loudspeaker, and so on, and may also include a wired interface, a wireless interface, and so on.

In the embodiment of the present disclosure, the memory 404 may include at least one of the following: a random access memory, a nonvolatile memory, and an external memory. The memory 404 may store program codes. The processor 401 performs any of the above methods for controlling charging by invoking the program codes stored in the memory 404. The memory 404 mainly includes a program storage area and a data storage area. The program storage area may store an operating system, applications for at least one function, and so on. The data storage area may store data created according to usage of the terminal and so on. In the embodiment of the present disclosure, the operating system may be Android system, iOS system, Windows operating system, or other.

In the embodiment of the present disclosure, the communication interface 405 may be a USB interface, and is operable to communicate with the terminal. The terminal may be a smart phone, a tablet computer, a digital camera, or the like.

The above disclosures illustrate preferable embodiments of the present disclosure. It should be pointed out that a person of ordinary skill in the art can make several changes and polish without departing from the principle of the present disclosure, and these changes and polish shall be deemed as the scope of protection of the present disclosure.

## Claims

1. A charging control method, applying to charging a terminal by a computing device, the method comprising:
determining whether data transmission is being performed between the computing device and the terminal when a communication interface of the computing device is coupled with the terminal; and
setting a current value of charging current output to the terminal to be a charging current value corresponding to a fast charging mode when no data transmission is performed between the computing device and the terminal.

2. The charging control method of claim 1, further comprising:
setting the current value of the charging current output to the terminal to be a charging current value corresponding to a normal charging mode when the data transmission is being performed between the computing device and the terminal.

3. The charging control method of claim 2, wherein setting the current value of the charging current output to the terminal to be the charging current value corresponding to the normal charging mode comprises:
obtaining a current data transmission rate;
determining a charging current value corresponding to the current data transmission rate according to a preset mapping relation between data transmission rate ranges and charging current values; wherein, the charging current value corresponding to each of the data transmission rate ranges is a charging current value corresponding to the normal charging mode; and in the preset mapping relation between the data transmission rate ranges and the charging current values, each of the data transmission rate ranges corresponds to one of the charging current values; and
setting the current value of the charging current output to the terminal to be the charging current value corresponding to the current data transmission rate.

4. The charging control method of claim 1, wherein determining whether the data transmission is being performed between the computing device and the terminal comprises:
determining whether the computing device is transmitting data through a communication module of the computing device;
determining that the data transmission is being performed between the computing device and the terminal when the computing device is transmitting data through the communication module of the computing device; and
determining that no data transmission is performed between the computing device and the terminal when the computing device does not transmit data through the communication module of the computing device.

5. The charging control method of claim 1, wherein determining whether the data transmission is being performed between the computing device and the terminal comprises:
determining whether a clock of the communication interface is in an operation state;
determining that the data transmission is being performed between the computing device and the terminal when the clock of the communication interface is in the operation state; and
determining that no data transmission is performed between the computing device and the terminal when the clock of the communication interface is not in the operation state.

6. The charging control method of claim 1, wherein determining whether the data transmission is being performed between the computing device and the terminal comprises:
determining whether a buffer of a communication module of the computing device is empty, the buffer being for temporary caching;
determining that the data transmission is being performed between the computing device and the terminal when the buffer is not empty; and
determining that no data transmission is performed between the computing device and the terminal when the buffer is empty.

7. A charging control system, applying to charging a terminal by a computing device, the system comprising:
a transmission determination module, configured to determine whether data transmission is being performed between the computing device and the terminal when a communication interface of the computing device is coupled with the terminal; and
a charging control module, configured to set a current value of charging current output to the terminal to be a charging current value corresponding to a fast charging mode when no data transmission is performed between the computing device and the terminal.

8. The charging control system of claim 7, wherein the charging control module is further configured to:
set the current value of the charging current output to the terminal to be a charging current value corresponding to a normal charging mode when the data transmission is being performed between the computing device and the terminal.

9. The charging control system of claim 8, wherein the charging control module configured to set the current value of the charging current output to the terminal to be the charging current value corresponding to the normal charging mode is configured to:
obtain a current data transmission rate;
determine a charging current value corresponding to the current data transmission rate according to a preset mapping relation between data transmission rate ranges and charging current values; and
set the current value of the charging current output to the terminal to be the charging current value corresponding to the current data transmission rate; wherein, the charging current value corresponding to each of the data transmission rate ranges is a charging current value corresponding to the normal charging mode; and in the preset mapping relation between the data transmission rate ranges and the charging current values, each of the data transmission rate ranges corresponds to one of the charging current values.

10. The charging control system of claim 7, wherein the transmission determination module configured to determine whether the data transmission is being performed between the computing device and the terminal is configured to:
determine whether the computing device is transmitting data through a communication module of the computing device;
determine that the data transmission is being performed between the computing device and the terminal when the computing device is transmitting data through the communication module of the computing device; and
determine that no data transmission is performed between the computing device and the terminal when the computing device does not transmit data through the communication module of the computing device.

11. The charging control system of claim 7, wherein the transmission determination module configured to determine whether the data transmission is being performed between the computing device and the terminal is configured to:
determine whether a clock of the communication interface is in an operation state;
determine that the data transmission is being performed between the computing device and the terminal when the clock of the communication interface is in the operation state; and
determine that no data transmission is performed between the computing device and the terminal when the clock of the communication interface is not in the operation state.

12. The charging control system of claim 7, wherein the transmission determination module configured to determine whether the data transmission is being performed between the computing device and the terminal is configured to:
determine whether a buffer of a communication module of the computing device is empty, the buffer being for temporary caching;
determine that the data transmission is being performed between the computing device and the terminal when the buffer is not empty; and
determine that no data transmission is performed between the computing device and the terminal when the buffer is empty.

13. A computing device, comprising:
a communication interface;
a memory storing a set of program codes; and
a processor configured to invoke the set of program codes to perform following operations:
determining whether data transmission is being performed between the computing device and the terminal when the communication interface of the computing device is coupled with the terminal; and
setting a current value of charging current output to the terminal to be a charging current value corresponding to a fast charging mode when no data transmission is performed between the computing device and the terminal.

14. The computing device of claim 13, wherein the set of program codes are further invoked to perform following operations:
setting the current value of the charging current output to the terminal to be a charging current value corresponding to a normal charging mode when the data transmission is being performed between the computing device and the terminal.

15. The computing device of claim 14, wherein setting the current value of the charging current output to the terminal to be the charging current value corresponding to the normal charging mode comprises:
obtaining a current data transmission rate;
determining a charging current value corresponding to the current data transmission rate according to a preset mapping relation between data transmission rate ranges and charging current values; wherein, the charging current value corresponding to each of the data transmission rate ranges is a charging current value corresponding to the normal charging mode; and in the preset mapping relation between the data transmission rate ranges and the charging current values, each of the data transmission rate ranges corresponds to one of the charging current values; and
setting the current value of the charging current output to the terminal to be the charging current value corresponding to the current data transmission rate.

16. The computing device of claim 13, wherein determining whether the data transmission is being performed between the computing device and the terminal comprises:
determining whether the computing device is transmitting data through a communication module of the computing device;
determining that the data transmission is being performed between the computing device and the terminal when the computing device is transmitting data through the communication module of the computing device; and
determining that no data transmission is performed between the computing device and the terminal when the computing device does not transmit data through the communication module of the computing device.

17. The computing device of claim 13, wherein determining whether the data transmission is being performed between the computing device and the terminal comprises:
determining whether a clock of the communication interface is in an operation state;
determining that the data transmission is being performed between the computing device and the terminal when the clock of the communication interface is in the operation state; and
determining that no data transmission is performed between the computing device and the terminal when the clock of the communication interface is not in the operation state.

18. The computing device of claim 13, wherein determining whether the data transmission is being performed between the computing device and the terminal comprises:
determining whether a buffer of a communication module of the computing device is empty, the buffer of the communication module being for temporary caching;
determining that the data transmission is being performed between the computing device and the terminal when the buffer is not empty; and
determining that no data transmission is performed between the computing device and the terminal when the buffer is empty.
